# EUROPEAN PATENT APPLICATION

(11) **EP 2 905 717 A1**
(43) Date of publication of application: **12.08.2015**
(21) Application number: 14305157.1
(22) Date of filing: 05.02.2014
(51) Int. Cl.: G06F 21/44, G06F 21/33, G06F 21/31

(54) **Device and method for device and user authentication**

(71) Applicant: Thomson Licensing, 92130 Issy-les-Moulineaux (FR)
(72) Inventor: Karroumi, Mohamed, 35576 Cesson Sévigné (FR)
(74) Representative: Huchet, Anne

(57) **Abstract**

A user sends (S302) a request through a first device (110) to a second device (120), which returns (S304) its certificate that is verified (S306) by the first device. The first device sends (S308) its certificate to the second device that verifies (S310) the certificate and determines (S312) if user credentials are needed. If so, it sends (S314) a request to the user via the first device. The user enters (S316) login and password, which are encrypted (S318) and sent (S320) to the second device. The second device decrypts this information and uses it to generate (S322) a verification value that is compared with a password verifier in the received certificate. If they match, both the user and the first device are authenticated by the second device, which sends (S324) the result of the authentication to the first device that then checks (S326) this result. Thus device and user authentication are combined, which allows authentication in distributed networks such as peer-to-peer networks.

## Description

### TECHNICAL FIELD

The present disclosure relates generally to computer network security and in particular authentication of devices in such networks.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

In the prior art, different techniques are used to authenticate a device or to verify the identity of a user. The most common is the use of a login (i.e. user identity) and a password. The entered login and password (or, more commonly, a password verifier derived from the password) are verified against a predetermined list maintained by a server. If the combination is not correct, system access is not permitted. In short, password-based authentication prevents unauthorized users from accessing a system.

Other authentication techniques are based on public key cryptography. The client or server holds a (probably or truly) unique public/private key pair. Private keys are kept secret while public keys can be exchanged using socalled X509 certificates. To authenticate a client or a server, Transport Layer Security (TLS) can be used. TLS is a cryptographic protocol that protects exchanged data and operates at the protocol layer such as HTTP or at the transport layer such as TCP or UDP. For example, when establishing an HTTPS connection, the client and server exchange their X509 certificates. The certificates, which contain the public keys, are used to authenticate both parties, and subsequently permit the computation of a session key that is used to encrypt data. In order to ensure the legitimacy of the certificates, these are signed by a trusted Certification Authority (CA).

Although current implementations of authentication protocols permit establishment of mutual trust between parties, they have a number of significant deficiencies:
- They are not well adapted for a decentralized communication systems, i.e. systems where a device can be both client and server, possibly at the same time.
- They do not support password-based mutual authentication, i.e. an authentication protocol where both the client and the server each enter a different login and a different password instead of certificates. (They generally support password-based authentication for the client only).
- They are vulnerable to certificate theft attacks.

It will thus be appreciated that password-based authentication mechanisms are well adapted for a centralized client-server communication system. Each server can check that a user's credentials (login, password) match an entry in an internal database before relaying the message to another client. However, in a decentralized system (e.g. a peer-2-peer network) where clients communicate directly without passing via a server at any point, password-based cannot be implemented easily.

Public-Key Infrastructure (PKI) and certificate-based authentication mechanisms are better adapted to such decentralized systems. However, a certificate is generally tied to a specific device and is thus useful only for device to device authentication, whereas users tend to authenticate from different devices for which password authentication is well suited.

A naïve solution would be for each client to store the full set of all possible user credentials. A major problem with such a solution is that the set of user credentials must be known in advance and/or be frequently updated and distributed to every client. This is especially problematic when a user joins or leaves the system.

In a hybrid system, both user-to-user communication and user-to-device communication are possible. Therefore, both password-based authentication and certificate-based authentication should be implemented. It will thus be appreciated that it is desired to have an authentication mechanism that integrates both certificate-based and password-based mechanisms at the same time. The present disclosure provides such an authentication mechanism.

### SUMMARY

In a first aspect, the disclosure is directed to a device for performing authentication. The device comprises a memory configured to store a first certificate for an enrolment server; and a processor configured to: verify a second certificate for a further device using a key in the first certificate, the second certificate comprising a password verifier; receive information to be used to generate a password verification value; generate the password verification value using the received information; compare the password verification value and the password verifier; and determine that the further device is authenticated upon successful verification of the second certificate and successful comparison of the password verification value and the password verifier.

In a first embodiment, the information to be used to generate the password verification value is received from the further device. It is advantageous that the information comprises a login and a password. It is further advantageous that the information is received encrypted and the processor is further configured to decrypt the received, encrypted information.

In a second embodiment, the memory is further configured to store a third certificate for the device signed by the enrolment server private key associated to the key in the first certificate, and the processor is configured to send the third certificate to the further device.

In a third embodiment, the processor is further configured to determine if the second certificate comprises a password verifier; and, if so, request the information to be used to generate a password verification value from the further device.

In a fourth embodiment, the device further comprises a user interface configured to receive a login and a password from a user, and the processor is further configured to send the login and the password to the further device, advantageously encrypted or hashed.

In a second aspect, the disclosure is directed to a method of performing authentication. A processor verifies a certificate for a further device using a verification key, the certificate comprising a password verifier; receives information to be used to generate a password verification value from the further device; generates the password verification value; determines that the further device is authenticated upon successful verification of the certificate and if the password verification value matches the password verifier.

In a first embodiment, the processor further determines if the certificate comprises a password verifier; and requests the information to be used to generate a password verification value.

In a second embodiment, the processor further sends a certificate for the device to the further device.

In a third embodiment, the information is received in encrypted form and the processor further decrypts the encrypted information.

### BRIEF DESCRIPTION OF DRAWINGS

Advantageous features of the present disclosure will now be described, by way of non-limiting example, with reference to the accompanying drawings, in which
Figure 1 illustrates an exemplary system in which an embodiment of the disclosure is implemented;
Figure 2 illustrates an advantageous embodiment of the enrolment phase of the present disclosure; and
Figure 3 illustrates mutual device authentication according to a first embodiment of the present disclosure.

### DESCRIPTION OF EMBODIMENTS

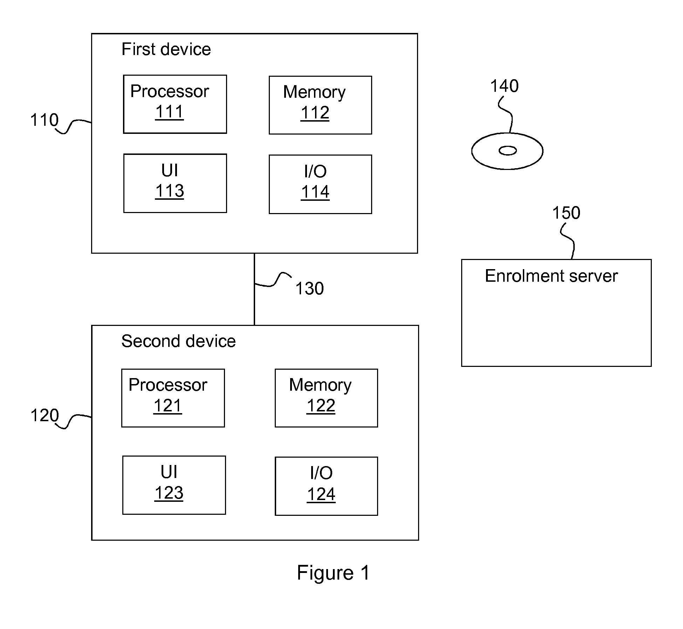

Figure 1 illustrates an exemplary system 100 in which the disclosure is implemented. The system 100 comprises a first computing device ("first device") 110 and a second computing device ("second device") 120. The first and second devices 110, 120 can be any kind of suitable computer or device capable of performing calculations, such as a standard Personal Computer (PC), a workstation, a Smartphone and a tablet. The first and second devices 110, 120 each preferably comprise at least one processor 111, 121, internal of external memory 112, 122, a user interface 113, 123 for interacting with a user, and a second interface 114, 124 for interaction with other devices over connection 130. The first and second devices 110, 120 each also preferably comprise an interface (not shown) for reading a software program from a digital data support 140 that stores instructions that, when executed by a processor, performs any of the methods described hereinafter. The system 100 further comprises an enrolment server 150 that will be described further hereinafter. The skilled person will appreciate that the illustrated devices are very simplified for reasons of clarity and that real devices in addition would comprise features such as power supplies and persistent storage.

Briefly speaking, a salient idea of the disclosure is to use a unique certificate that embeds a password verifier to authenticate both the device and the user.

It is advantageous that the disclosure is implemented as having three phases: a registration phase, a device authentication phase, and a user authentication phase. The registration phase needs be performed only once when a new user or a new device joins the system, whereas the authentication phases are intended to be performed a plurality of times, such as every time two devices prepare to exchange sensitive data.

In the registration phase, an enrolment server issues X509 certificates to enrolled devices as well as a login/password to users who request registration. Issuing certificates as such is well known in the art. However, the certificates according to the present disclosure comprise a Distinguished Name (DN), an RSA public key PK and, notably, a password verifier PV. The certificate is digitally signed by a trusted Certificate Authority (CA). The DN field of the certificate can possibly be set to the user's Login. The password verifier can be used to verify a password issued to or chosen by the user.

After successful registration to the enrolment server, certificates are used for device authentication and login/password is used for user authentication.

In the device authentication phase, as will be further described hereinafter, the devices that want to perform mutual authentication present their certificates as their credentials to the other device (normally, mutual authentication is performed between two devices). Each device then validates the received certificate's signature, using its trusted CA certificate. The presence of the password verifier PV inside the certificate proves that the certificate is linked to an end user. If at least one of the exchanged certificates contains a PV, then the user authentication phase is possible. The secure communication channel can be used if the mutual certificate's authentication phase is successful.

To authenticate the user, the device that received a certificate with a password verifier PV, requests the user login and password. Once the user submits the login and password, they are verified against the password verifier PV inside the sender's certificate. If the verification is successful, the recipient accepts to exchange data through the secure communication channel; otherwise the communication is aborted.

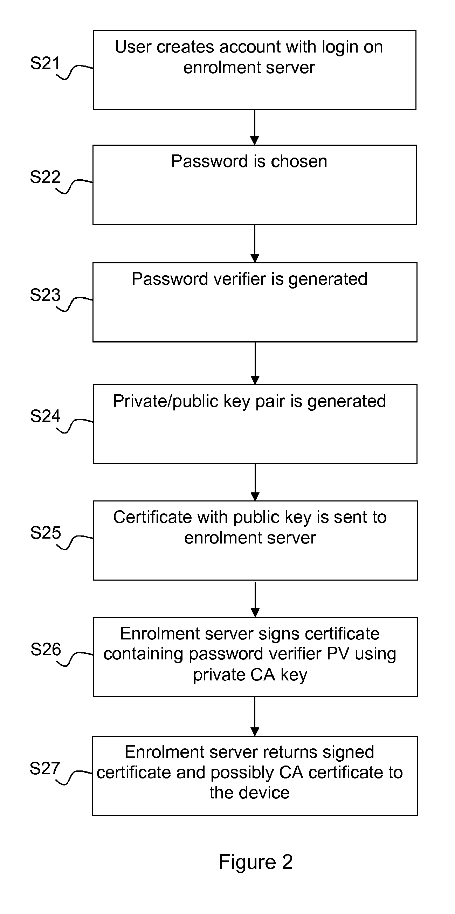

Figure 2 illustrates an advantageous embodiment of the enrolment phase. It will be appreciated that many of the steps can be performed in a different order.
1. The user creates S21 an account on the enrolment server with a given login, e.g. username1.
2. A password, e.g. userpwd1, is chosen S22 by the user. The enrolment server can also generate the password send it back to the user.
3. The user device generates S23 a password verifier PV from the password, for example by hashing a concatenation of the login, the password and a random salt, i.e. PV = f(username1 | userpwd1 | salt). PV should be unique per user. The function f that is used to generate PV is preferably a one-way, collision-resistant function, i.e. it should be computationally unfeasible to retrieve a login and password from PV or to find two different inputs that match the same PV. It will thus be appreciated that the function f advantageously is implemented as any suitable hash function such as SHA-1 or MD-5.
4. An RSA private key is generated S24 by the user's device.
5. A user certificate embedding the public key, the password verifier PV and the salt is sent S25 to the enrolment server for signing. It should be noted that the certificate does not comprise the password in clear-text form. Alternatively, if the enrolment server has a copy of the user's password, it can generate the salt and the password verifier PV that it embeds in the certificate before signing.
6. The user certificate is signed S26 by the enrolment server using a trusted CA private key. The enrolment server holds a CA certificate associated with its private key that, for security reasons, never should leave the enrolment server.
7. The signed user certificate and the CA certificate (if not already present in the user's device storage) are returned S27 to the user device for storage.

It will be appreciated that the salt provides protection against dictionary attacks and rainbow table attacks. The efficiency of this type of attacks depends also on the speed of the used hash algorithm. To reduce the efficiency (i.e. the rate at which the attacker can make attempts) it is possible to apply many iterations of the hash algorithm. For example, the Password-Based Key Derivation Function (PBKDF) method applies several thousand iterations of the hash function.

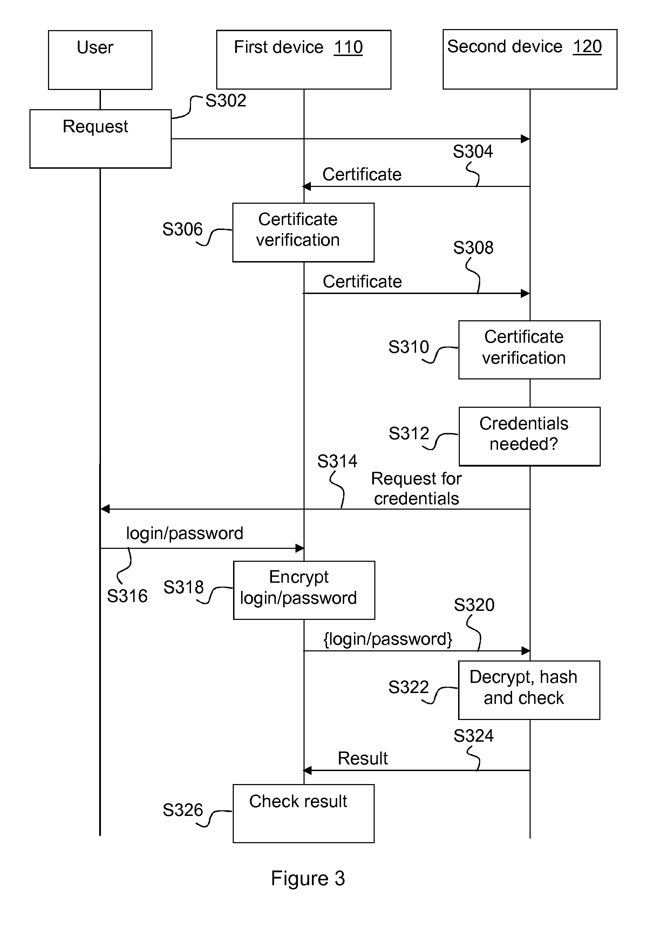

Figure 3 illustrates mutual device authentication according to a first advantageous embodiment of the present disclosure. As the authentication method relies on certificates, the CA implicitly plays a key part.
1. A user sends S302 a request (for example for a secure connection or for access to a protected resource) to the second device 120, using the first device 110.
2. The second device 120 presents S304 its certificate to the first device 110.
3. The first device 110 verifies S306 the certificate of the second device 120.
4. If successful, the first device 110 sends S308 its certificate to the second device 120.
5. The second device 120 verifies S310 the certificate of the first device 110.
6. The second device 120 verifies S312 if the certificate of the first device 110 comprises a password verifier PV. If this is the case, the second device 120 can request S314 user credentials from the user on the second device using interface 123 or via the first device 110 using a deported interface 123 (in the latter case, interface 113 can act as a deported interface 123).

Verification of the certificate as such, i.e. without user credentials, is normally performed using some kind of challenge-response protocol like the protocol implemented in TLS, but as this is well known in the art, it will not be further described.

It will be appreciated that variants are possible, notably obtained by altering the order of the steps. For example: the first device 110 can include its certificate in the request S302, the second device 120 can verify the certificate of the first device 110 first, and the second device 120 can request the credentials before verifying the certificate of the first device.

In the advantageous embodiment, verification of the credentials is performed as follows.
7. The user inputs S316 its login and password using the first device 110.
8. The first device 110 encrypts S318 the login and password using an encryption key established after the mutual certificate-based authentication.
9. The first device 110 sends S320 the encrypted login and password to the second device 120.
10. The second device checks S322 the password by decrypting the encrypted login and password (using the mutually agreed decryption key), retrieving the salt from the received user certificate, generating a password verification value the same way the password verifier was generated - in the advantageous embodiment, by hashing a concatenation of the login, the password and the salt - and checking that the password verification value matches the password verifier (retrieved from the same certificate).
11. The second device 120 sends S324 the result of the check to the first device 110: if the hashes match, the user request is granted; if not, the second device 120 refuses the access (e.g. to the protected resource) and the first device 110 is informed that the credentials are invalid. It is naturally advantageous that the first device 110 then in turn informs its user.
12.The first device 110 checks S326 the received result, informs the user and reacts accordingly (exactly how is beyond the scope of the present disclosure).

Steps 7-12 (i.e. S316-S326) can be repeated for every action requiring user authentication.

In the description, for clarity of explanation, a single certificate is sent or received by each device during the authentication process. It will however be understood that it is also possible to have a chain of certificates where one certificate can be used to verify the next certificate in the chain. In this case, the password verifier may be comprised in any of the certificates in the chain. As long as the first certificate in the chain is verified using the public key of a Root certificate (normally the CA certificate) that is already known to the device, all other certificates in the chain are then in fact verified using the public keys of the preceding certificates in the chain (including that of the Root certificate).

In a variant, password verification is performed also on the first device 110 by first having the user input login and password (as in S316). The first device 110 then retrieves the salt, generates a password verification value the same way the password verifier was generated and checks that the password verification value matches the password verifier retrieved from its own certificate. In case of a match, the user authentication is successful and the second device 120 can be informed of this. In case of a mismatch, the user is informed that the credentials were invalid.

In a further variant of the present disclosure, the password is verified on the second device 120 before the mutual device authentication. This means that the secure channel that is established through the authentication does not yet exist and thus cannot be used for secure transfer of the login and password. As insecure transfer of login and password can enable an attacker to sniff the user's credentials, it is important to protect these. In other words, there is a need for a secure password authentication algorithm. An example of a secure protocol is Digest Access Authentication, as specified in RFC2069 or in RFC2617, that is based on two specific values HA1 and HA2 (c.f. http://tools.ietf.org/html/rfc2069 or tools.ietf.org/html/rfc2617). Loosely speaking HA1 is the hash of the username and password and HA2 is the hash of the unique resource identifier for a resource to which the user is given access. In that case, the password verifier PV can be generated from HA1 and HA2 by for example hashing a concatenation of HA1, a random salt, and HA2, i.e. for example PV = SHA-1(HA1 | salt | HA2). A further possible extension it to have multiple password verifiers PV_1, PV_2, ..., PV_n embedded in the certificate and associated to the resources to which the user has the access rights. Another example of a secure protocol is any protocol belonging to the family augmented password-authenticated key agreement (PAKE) protocols such as AMP, Augmented-EKE, B-SPEKE, PAK-Z, Secure Remote Password (SRP) and AugPAKE (as defined in RFC 6628).

It will thus be appreciated that the present disclosure can provide a protocol for simultaneous authentication of device and user. The authentication mechanism is decentralized and over two factors. In addition, users are not allowed to view others users credentials - the credentials are stored in encrypted form - nor can they modify the credentials since they are signed by a central authority.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A device (110, 120) for performing authentication comprising:
- a memory (112, 122) configured to store a first certificate, the first certificate being for an enrolment server (150); and
- a processor (111, 121) configured to:
- verify a second certificate using a key in the first certificate, the second certificate comprising a password verifier, the second certificate being for a further device;
- receive information to be used to generate a password verification value;
- generate the password verification value using the received information;
- compare the password verification value and the password verifier; and
- determine that the further device is authenticated upon successful verification of the second certificate and successful comparison of the password verification value and the password verifier.

2. The device of claim 1, wherein the information to be used to generate the password verification value is received from the further device.

3. The device of claim 2, wherein the information comprises a login and a password.

4. The device of claim 2, wherein the information is received encrypted and the processor is further configured to decrypt the received, encrypted information.

5. The device of claim 1, wherein the memory is further configured to store a third certificate, the third certificate being for the device and being signed by the enrolment server using a private key associated to the key in the first certificate, and wherein the processor is configured to send the third certificate to the further device.

6. The device of claim 1, wherein the processor is further configured to:
- determine if the second certificate comprises a password verifier; and
- if the second certificate comprises a password verifier, request the information to be used to generate a password verification value from the further device.

7. The device of claim 1, further comprising a user interface (113, 123) configured to receive a login and a password from a user, wherein the processor is further configured to send the login and the password to the further device.

8. The device of claim 7, wherein the processor is further configured to send the login and the password encrypted.

9. The device of claim 7, wherein the processor is further configured to send the login and the password hashed.

10. A method of performing authentication, the method comprising at a processor (122) of a device (120):
- verifying (S310) a certificate for a further device using a verification key, the certificate comprising a password verifier;
- receiving (S320) information to be used to generate a password verification value from the further device;
- generating (S322) the password verification value;
- determining that the further device is authenticated upon successful verification of the certificate and if the password verification value matches the password verifier.

11. The method of claim 10, further comprising:
- determining (S312) if the certificate comprises a password verifier; and
- requesting (S312) the information to be used to generate a password verification value.

12. The method of claim 10, further comprising sending (S304) a certificate for the device to the further device.

13. The method of claim 10, wherein the information is received in encrypted form, the method further comprising the step of decrypting the encrypted information.

14. The method of claim 10, wherein the information is received hashed.
